# EUROPÄISCHE PATENTSCHRIFT

(11) **EP 3 148 724 B1**
(45) Veröffentlichungstag und Bekanntmachung des Hinweises auf die Patenterteilung: **15.05.2019**
(21) Anmeldenummer: 15723700.9
(22) Anmeldetag: 19.05.2015
(51) Int. Cl.: B21D 39/04, F16L 13/14, F16L 33/207

(54) **SCHIEBEPRESSRING/WERKZEUGTEIL ZUM VERBINDEN VON ROHREN**
SLIDING-COMPRESSION RING/TOOL PART FOR CONNECTING PIPES
ENSEMBLE ANNEAU COULISSANT DE COMPRESSION/PARTIE D'OUTIL PERMETTANT LE RACCORDEMENT DE TUYAUX

(30) Priorität: 28.05.2014 DE 102014107602
(43) Veröffentlichungstag der Anmeldung: 05.04.2017
(73) Patentinhaber: Knipping, Daniel, 41844 Wegberg-Holtum (DE)
(72) Erfinder: Knipping, Daniel, 41844 Wegberg-Holtum (DE)
(74) Vertreter: Beckmann, Jürgen
(86) Internationale Anmeldenummer: PCT/EP2015/061024
(87) Internationale Veröffentlichungsnummer: WO 2015/181002

(56) Entgegenhaltungen:
- EP-A1- 1 186 820
- WO-A1-2009/015927
- DE-C1- 19 958 102
- US-A1- 2002 000 721

## Beschreibung

Die Erfindung betrifft ein Schiebepressring/Werkzeugteil zum Verpressen einer Quetschhülse auf einem Rohrende, ein Axialpresssystem mit einem derartigen Schiebepressring/Werkzeugteil, eine Rohrpresskupplung, sowie ein Verfahren zur Herstellung einer Verbindung zwischen den Enden von Rohren.

Aus der EP 2 322 831 A1 ist eine Rohrpresskupplung zur Verbindung von Mehrschichtrohren bekannt, bei welcher eine Stützhülse in den zu verbindenden Rohrenden angeordnet wird. Anschließend wird eine Überwurf-Presshülse mit Zwischenlegung einer Quetschhülse auf die Rohrenden geschoben, wobei die Durchmesser so abgestimmt sind, dass die Presshülse die Quetschhülsen durch die Rohrenden radial nach innen auf die Stützhülse presst. Nach Abschluss des Pressvorganges verbleiben die Presshülse und die Quetschhülse auf der Rohrverbindung. Für eine komplette Rohrkupplung werden somit fünf Teile benötigt.

Aus der EP 1 186 820 A1 ist ein Verfahren zur Herstellung einer unlösbaren Verbindung zwischen dem Endbereich eines Rohres und einem Verbindungselement mit Hilfe eines radiale Presskräfte übertragenden Verformwerkzeugs bekannt.

Vor diesem Hintergrund war es Aufgabe der vorliegenden Erfindung, eine kostengünstigere Verbindung von Rohrenden bereitzustellen, insbesondere von Mehrschichtverbundrohren, Mehrschichtrohren, Metallrohren und/oder Kunststoffrohren, beispielsweise Kunststoffrohren mit Außenarmierung bzw. Außengeflecht (z.B. Kevlar).

Diese Aufgabe wird durch ein Schiebepressring/Werkzeugteil nach Anspruch 1, durch ein Axialpresssystem nach Anspruch 6, sowie durch ein Verfahren nach Anspruch 11 gelöst. Vorteilhafte Ausgestaltungen sind in den Unteransprüchen enthalten.

Ein Schiebepressring/Werkzeugteil gemäß einem ersten Aspekt der vorliegenden Erfindung dient dem Verpressen einer Quetschhülse auf einem Ende eines Rohres, in welches eine Stützhülse eingeführt worden ist. Bei dem Rohr kann es sich insbesondere um ein Metallrohr, ein Mehrschicht-Verbundrohr und/oder um ein Kunststoffrohr (z.B. PEX-Rohr) handeln. Die Rohrdurchmesser liegen typischerweise in einem Bereich von ca. 12 mm bis ca. 110 mm, wobei jedoch auch andere Durchmesser verarbeitet werden können, beispielsweise bis zu 160 mm. Hinsichtlich der Ausgestaltung der Stützhülse und der Quetschhülse kann auf den Stand der Technik verwiesen werden, beispielsweise in Form der DE 196 51 817, DE 91 09 323, EP 1 700 059, DE 10 2008 024 360 und EP 2 322 831 A1. Die verwendeten Quetschhülsen können optional dahingehend ausgebildet sein, dass sie an ihrer Außenseite Erhebungen oder Höcker mit zusätzlichem Material aufweisen.

Das erfindungsgemäße Schiebepressring/Werkzeugteil soll weiterhin so ausgestaltet sein, dass es in einem "Arbeitszustand" einen gegebenen Innendurchmesser hat, und in einen davon verschiedenen "Öffnungszustand" überführt werden kann, in dem sein Innendurchmesser größer ist als im Arbeitszustand.

In diesem Zusammenhang ist unter dem "Innendurchmesser" des Schiebepressring/Werkzeugteiles die lichte Weite einer vom Schiebepressring/Werkzeugteil gebildeten Öffnung zu verstehen. In der Regel wird die genannte Öffnung kreisförmig (bzw. kreiszylindrisch) sein, so dass der Innendurchmesser dem geometrischen Durchmesser des Kreises entspricht. Bei einer allgemeinen Öffnungsform kann der Innendurchmesser definiert werden als der größte Durchmesser eines kreiszylindrischen Körpers (z.B. eines Rohres), welcher in die Öffnung hineinpasst. Des Weiteren sei darauf hingewiesen, dass im Arbeitszustand typischerweise eine rundum (360°) geschlossene, also O-förmige Öffnung des Schiebepressring/Werkzeugteiles vorliegt, während dies im Öffnungszustand nicht unbedingt der Fall sein muss. Insbesondere kann im Öffnungszustand das Schiebepressring/Werkzeugteil in zwei oder mehr Teile zerlegt sein, so dass diese einen quasi beliebig großen "Innendurchmesser" bilden.

Gemäß einem zweiten Aspekt betrifft die Erfindung ein Schiebepressring/Werkzeugteil zum Verpressen einer Quetschhülse auf einem Ende eines Rohres, in welches eine Stützhülse eingeführt worden ist, wobei das Schiebepressring/Werkzeugteil aus mindestens zwei relativ zueinander beweglichen Teilen besteht. Das Schiebepressring/Werkzeugteil gemäß dem zweiten Aspekt kann insbesondere auch die Merkmale des Schiebepressring/Werkzeugteiles nach dem oben erläuterten ersten Aspekt aufweisen. In diesem Falle wird die Beweglichkeit der Teile typischerweise dazu benutzt, das Schiebepressring/Werkzeugteil zwischen einem Arbeitszustand mit kleinerem Innendurchmesser und einem Öffnungszustand mit größerem Innendurchmesser zu verändern.

Das Schiebepressring/Werkzeugteil nach dem ersten und/oder zweiten Aspekt der Erfindung hat den Vorteil, dass es nach dem Verpressen einer Quetschhülse von der Rohrverbindung entfernt werden kann. Das Schiebepressring/Werkzeugteil lässt sich daher mehrfach zum Erzeugen einer Rohrpresskupplung verwenden. Da es nicht auf der Rohrverbindung verbleibt, kann Letztere leichter und kostengünstiger ausgebildet werden. Ein vorheriges Aufweiten von Rohren ist nicht erforderlich. Weiterhin werden für eine komplette Rohrkupplung nur drei Teile benötigt.

Gemäß einer bevorzugten Ausführungsform besteht das Schiebepressring/Werkzeugteil aus mindestens zwei Teilen, welche durch ein Gelenk verbunden sind. Durch die Beweglichkeit um das Gelenk können die Teile dann zwischen einem Arbeitszustand und einem Öffnungszustand bewegt werden, wobei das Schiebepressring/Werkzeugteil insgesamt jedoch immer zusammenhängend bleibt.

Das Schiebepressring/Werkzeugteil kann insbesondere aus drei Teilen bestehen, welche kettenartig gelenkig miteinander verbunden sind. Die zwei endständigen Teile können dabei insbesondere gleich bzw. spiegelsymmetrisch ausgebildet und am mittleren Teil angeordnet sein.

Bei einer anderen Ausführungsform der Erfindung besteht das Schiebepressring/Werkzeugteil aus mindestens zwei Teilen, welche im Arbeitszustand durch mindestens einen Bolzen verbunden sind. Durch eine passende Dimensionierung des Bolzens und/oder die Wahl einer größeren Anzahl von Bolzen kann in einfacher Weise eine quasi beliebig stabile Verbindung zwischen den Teilen hergestellt werden. Des Weiteren können durch den Bolzen optional separate Teile oder über ein Gelenk gekoppelte Teile fest miteinander verbunden werden.

Erfindungsgemäß weist der Schiebepressring Angriffsflächen auf, die zu seiner Axialrichtung (d.h. der Körperachse des Werkzeugs, entlang der es beim Betrieb über eine Quetschhülse geschoben wird) geneigt sind, so dass eine dort angreifende Presskraft eine radial einwärts gerichtete Kraftkomponente ausübt. Die "Presskraft" ist dabei eine senkrecht zur Angriffsfläche wirkende Kraft, die typischerweise von einer Axialpresse aufgebracht wird, um das Schiebepressring/Werkzeugteil über eine Quetschhülse zu schieben. Die Angabe "radial" ist in Bezug auf die Axialrichtung zu verstehen. Die "radial einwärts gerichtete Kraft" führt also dazu, dass die Teile des Schiebepressring/Werkzeugteils dem beim Vorschub von der Quetschhülse ausgeübten, radial auswärts gerichteten Druck standhalten können und sich das Schiebepressring/Werkzeugteil nicht öffnet. Der in Axialrichtung weisende Anteil der Presskraft erzeugt den Vorschub des Schiebepressring/Werkzeugteils. Die Angriffsfläche kann insbesondere eine Gleitfläche sein, auf die im Wesentlichen nur senkrecht zur Fläche stehende Kräfte ausgeübt werden können.

Das Schiebepressring/Werkzeugteil besteht typischerweise ganz oder teilweise aus Metall. Des Weiteren kann das Schiebepressring/Werkzeugteil zumindest teilweise gehärtet sein, insbesondere an seiner Innenkontur, welche in Kontakt zu der zu verpressenden Quetschhülse kommt. Durch die Härtung kann die notwendige Stabilität für eine Vielzahl von Pressvorgängen erzielt werden.

Gemäß einem weiteren Aspekt betrifft die Erfindung ein Axialpresssystem zur Verbindung von Rohren, welches die folgenden Komponenten enthält:
- Eine Stützhülse, welche in den Enden der zu verbindenden Rohre anzuordnen ist.
- Mindestens eine Quetschhülse, welche auf dem Ende mindestens eines der genannten Rohre anzuordnen ist (axial überlappend mit der Erstreckung der Stützhülse im Inneren des Rohres).
- Ein Schiebepressring/Werkzeugteil der oben beschriebenen Art, wobei der Innendurchmesser des Schiebepressring/Werkzeugteiles in seinem Arbeitszustand um ein gegebenes Maß geringer ist als der Außendurchmesser der Quetschhülse vor der Verpressung.

Für die Herstellung einer Rohrpresskupplung ist bei dem beschriebenen Axialpresssystem das Schiebepressring/Werkzeugteil über die Quetschhülse zu schieben, wodurch Letztere radial nach innen verpresst wird. Dieser Schiebevorgang kann auf unterschiedliche Weise ausgeführt werden. Insbesondere kann das Axialpresssystem eine Axialpresse umfassen, mit welcher das Schiebepressring/Werkzeugteil in seinem Arbeitszustand in Axialrichtung (der zu verbindenden Rohre bzw. der Stützhülse) über eine Quetschhülse gepresst werden kann. Derartige Axialpressen sind aus dem oben zitierten Stand der Technik bekannt sowie im Handel erhältlich (z.B. von den Herstellern i-press, Klauke oder REMS).

Optional kann das genannte Axialpresssystem zusätzlich eine Druckhülse umfassen, welche axial über eine verpresste Quetschhülse geschoben werden kann. Mit einer solchen Druckhülse kann eine Rückverformung der Quetschhülse verhindert und ein fester Sitz der Rohrverpressung dauerhaft garantiert werden. Dies gilt insbesondere für große Rohrdurchmesser, wo es zu starken Zug- und Stoßdruckspannungen kommen kann. Solche Spannungen können beispielsweise in der Hydraulik (Metallrohre) oder bei der Erdverlegung von größeren PEX-Rohrdurchmessern ab 63 mm auftreten, wie sie etwa im Fernwärmenetz zur Anwendung kommen. Die Druckhülse kann insbesondere aus Metall bestehen, z.B. aus Edelstahl. Die Wandungsdicke der Druckhülse ist entsprechend den zu erwartenden Belastungen zu wählen und kann beispielsweise zwischen 1 mm und 5 mm und mehr (je nach Rohrdurchmesser) betragen. Die Anbringung der Druckhülse auf der Quetschhülse kann auf verschiedene Weisen erfolgen. Insbesondere kann die Druckhülse mit dem gleichen bzw. demselben Schiebepressring/Werkzeugteil axial verschoben werden, wie es auch zum Verpressen der Quetschhülse verwendet wurde.

Gemäß einer weiteren Ausführungsform der Erfindung kann das Axialpresssystem so ausgebildet sein, dass die verpresste Quetschhülse mit der Stützhülse unmittelbar verbunden ist (also nicht allein mittelbar über das zugehörige Rohr). Insbesondere kann die verpresste Quetschhülse formschlüssig gegen eine Bewegung in beide Axialrichtungen (d.h. vor und zurück) an die Stützhülse gekoppelt sein. Die Stützhülse kann beispielsweise außen liegende Vertiefungen (z.B. in Form einer umlaufenden Nut) aufweisen, in die die Quetschhülse durch das Verpressen für einen dauerhaften Eingriff eingedrückt wird. Vorzugsweise weist die unverpresste Quetschhülse spezielle Erhebungen oder Höcker mit zusätzlichem Material auf, welches beim Verpressen in Vertiefungen der Stützhülse gepresst wird.

Bei dem Axialpresssystem können weiterhin die Axialpresse und das Schiebepressring/Werkzeugteil optional so ausgebildet sind, dass die Axialpresse beim axialen Vorschub des Schiebepressring/Werkzeugteils auf dieses eine radial einwärts gerichtet Kraft ausübt. Beispielsweise können an der Axialpresse einerseits und am Schiebepressring/Werkzeugteil andererseits schräg bzw. konisch zur Axialrichtung liegende Angriffs- oder Gleitflächen ausgebildet sein, die beim Verpressen die radial einwärts gerichtet Kraft erzeugen und damit automatisch zu einem Schließen des Schiebepressring/Werkzeugteils führen.

Eine Rohrpresskupplung, wie sie mit einem Schiebepressring/Werkzeugteil bzw. einem Axialpresssystem bzw. einem Verfahren der im übrigen Text beschriebenen Art herstellbar ist, umfasst die folgenden Komponenten:
- Mindestens ein Rohr, welches zumindest in einem endständigen Abschnitt durchgehend mit einem gleichbleibenden Radius ausgebildet ist. Das heißt, dass das Rohr im endständigen Abschnitt nicht aufgeweitet ist. Insbesondere kann das Rohr über seine gesamte axiale Erstreckung einen konstanten Radius haben und beispielsweise (abgesehen von Biegungen) zylindrisch sein. Des Weiteren sind vorzugsweise zwei Rohre mit derartigen endständigen Abschnitten vorhanden.
- Eine Stützhülse, die zumindest teilweise in einem Endbereich des endständigen Abschnittes im Rohr angeordnet ist (bzw. in den Endbereichen beider Rohre, wenn zwei Rohre vorhanden sind).
- Eine Quetschhülse, welche radial außen auf dem Endbereich des Rohres und zumindest teilweise axial überlappend mit der Stützhülse angeordnet ist und die rotationssymmetrisch um die Rohrachse verformt ist. Wenn zwei Rohre vorhanden sind, sind vorzugsweise entsprechend zwei derartige Quetschhülsen auf den verschiedenen Rohr-Endbereichen vorgesehen.

Die Rohrpresskupplung ist demnach in einem radialen Schnitt gesehen aus genau drei Lagen aufgebaut, nämlich (von innen nach außen):
- der Stützhülse,
- dem Rohr, und
- der Quetschhülse.

Eine weitere Komponente ist nicht erforderlich/vorhanden, insbesondere keine außen liegende Presshülse (denn die Quetschhülse liegt außen). Des Weiteren weist das Rohr keine Aufweitung auf. Die rotationssymmetrische Verformung beinhaltet ferner, dass es keine Absätze oder Stoßkanten gibt, wie sie beispielsweise beim Einsatz von Presszangen entstehen.

Gemäß einem weiteren Aspekt betrifft die Erfindung ein Verfahren zur Herstellung einer Verbindung zwischen den Enden von Rohren, welches die folgenden Schritte umfasst:
a) Anordnung der Enden der Rohre auf einer Stützhülse.
b) Anordnung von mindestens einer Quetschhülse auf einem Rohrende (in zumindest teilweise axialer Überlappung mit der Stützhülse).
c) Axiale Verschiebung eines Schiebepressring/Werkzeugteiles der oben beschriebenen Art über die Quetschhülse, so dass Material der Quetschhülse radial nach innen verdrängt wird.
d) Entfernung des Schiebepressring/Werkzeugteiles von der Rohrverbindung, beispielsweise durch Überführung des Schiebepressring/Werkzeugteiles in seinen Öffnungszustand oder Auseinanderbewegen von Teilen des Schiebepressring/Werkzeugteiles.

Das Verfahren kann insbesondere mit einem Axialpresssystem der oben beschriebenen Art ausgeführt werden. Allgemein gilt, dass aufgrund der Verwandtschaft von Schiebepressring/Werkzeugteil, Axialpresssystem, Rohrpresskupplung, und Verfahren die Erläuterungen, welche für eine dieser Ausführungsformen der Erfindung gegeben wurden, analog auch für die anderen Ausführungsformen gelten.

Optional kann bei dem Verfahren nach Schritt d) eine Druckhülse über die Quetschhülse geschoben werden, um die oben beschriebene Stabilisierung der Rohrverbindung zu erzielen. Das Anbringen der Druckhülse kann insbesondere durch axiale Verschiebung eines Schiebepressring/Werkzeugteiles der beschriebenen Art erfolgen. Vorzugsweise kann es sich hierbei um dasselbe Schiebepressring/Werkzeugteil handeln, welches auch zum Verpressen der Quetschhülse verwendet wurde.

Gemäß einer bevorzugten Ausführungsform der Erfindung können das Schiebepressring/Werkzeugteil und/oder die zugehörige Axialpresse so gestaltet sein, dass während des Verpressens das Schiebepressring/Werkzeugteil automatisch geschlossen gehalten wird. Das Schiebepressring/Werkzeugteil könnte beispielsweise eine konische Außenkontur haben, die in einer komplementär konischen Form der Axialpresse AP aufgenommen wird.

Im Folgenden wird die Erfindung mit Hilfe der Figuren beispielhaft näher erläutert. Dabei zeigt:
- Fig. 1: die Seitenansicht von zwei Rohrenden vor einer Verpressung, die auf eine Stützhülse aufgesteckt und mit Quetschhülsen umgeben sind, wobei die obere Hälfte der Figur eine Schnittansicht durch die Mittelebene des Rohres darstellt;
- Fig. 2: die Ansicht von Figur 1 nach dem axialen Vorschub des Schiebepressring/Werkzeugteiles über die Quetschhülse;
- Fig. 3: die fertige Rohrverbindung nach dem Verpressen;
- Fig. 4: eine perspektivische Ansicht des Schiebepressring/Werkzeugteiles mit einem Scharniergelenk;
- Fig. 5: eine Rohrverbindung in dem in Figur 1 gezeigten Zustand vor der Verpressung in einer Axialpresse;
- Fig. 6: das Entfernen eines Schiebepressring/Werkzeugteiles gemäß einer anderen Ausführungsform der Erfindung von der Rohrverbindung;
- Fig. 7: eine fertige Rohrverbindung entsprechend Figur 3 nach zusätzlicher Anbringung einer Druckhülse;
- Fig. 8: eine perspektivische Ansicht einer Druckhülse (teilweise geschnitten);
- Fig. 9: eine Druckhülse im Schnitt;
- Fig. 10: Ansichten entsprechend den Figuren 1 und 2 von zwei Rohrenden vor (oben) und nach (unten) einer Verpressung, wobei die Quetschhülsen durch das Verpressen an der Stützhülse arretiert werden;
- Fig. 11: eine vergrößerte Darstellung des in Figur 10 mit XI gekennzeichneten Ausschnitts;
- Fig. 12: eine perspektivische Ansicht eines Schiebepressring/Werkzeugteiles mit drei beweglichen Teilen und zwei Scharniergelenken;
- Fig. 13: die Kraftwirkung an einer Gleitfläche des Schiebepressring/Werkzeugteiles von Figur 12;
- Fig. 14: ein Axialpresssystem mit dem Schiebepressring/Werkzeugteil von Figur 12 in teilweise transparenter Ansicht;
- Fig. 15: die Herstellung einer Rohrpresskupplung mit dem Axialpresssystem von Figur 14.

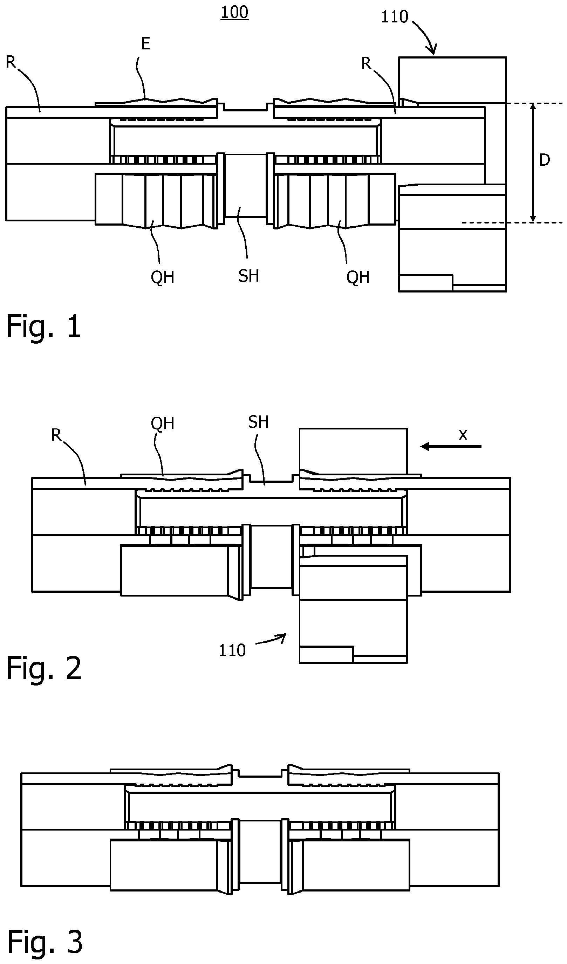

Die Figuren 1 bis 3 zeigen beispielhaft die Herstellung einer Rohrpresskupplung mit dem erfindungsgemäßen Schiebepressring/Werkzeugteil bzw. Axialpresssystem und Verfahren. Dabei sind in den Figuren ähnlich aufgebaute Ansichten dargestellt, bei denen in der oberen Hälfte die Teile in einem Schnitt entlang der Mittelebene dargestellt sind, während die untere Hälfte der Figuren eine Seitenansicht auf die vollständigen Teile wiedergibt.

In Figur 1 ist erkennbar, dass die Enden von zwei Rohren R auf die spiegelbildlich in verschiedene Richtungen zeigenden Fortsätze einer Stützhülse SH gesteckt worden sind. Bei den Rohren R kann es sich beispielsweise um dünnwandige oder dickwandige Metallrohre, um Mehrschicht-Verbundrohre, oder um PEX-Rohre handeln. Die Stützhülse SH ist an ihrer Außenseite mit Rillen bzw. Nuten profiliert.

Des Weiteren ist über jedes der beiden Rohrenden jeweils eine Quetschhülse QH geschoben, welche axial mit der im entsprechenden Rohrende steckenden Stützhülse SH überlappt. Die Quetschhülsen QH weisen an ihrer Außenseite Erhebungen E bzw. Höcker auf.

Schließlich ist in Figur 1 ein Schiebepressring/Werkzeugteil 110 dargestellt, welches über eines der zu verpressenden Rohre R geschoben ist, wobei es sich vor Beginn der Verpressung axial neben der Quetschhülse QH und der Stützhülse SH befindet. Das Schiebepressring/Werkzeugteil 110 ist in einem Arbeitszustand, in dem es eine 360°-geschlossene Öffnung aufweist mit einer (hier kreisförmigen) Innenkontur des Innendurchmessers D. Der Innendurchmesser D ist um ein gegebenes Maß von beispielsweise ca. 2.5 mm kleiner als der maximale Außendurchmesser der Quetschhülsen (d. h. deren Durchmesser im Bereich der Erhebungen E).

Figur 2 zeigt die Rohrpresskupplung nach dem Vorschub des Schiebepressring/Werkzeugteiles 110 in Axialrichtung x (die linke Hälfte der Zeichnung zeigt bereits den Zustand nach einer Verpressung). Erkennbar ist, dass die Erhebungen E der Quetschhülsen radial nach innen verdrängt werden. Hierdurch wird wiederum Material der Rohre R nach innen gedrückt, und zwar insbesondere in die Nuten der Stützhülse SH, wodurch es zu einem festen Sitz der Rohre auf der Stützhülse kommt.

Figur 3 zeigt in einer Darstellung wie in den Figuren 1 und 2 die fertige Rohrpresskupplung nach dem Pressvorgang und nach Öffnen und Entfernen des Schiebepressring/Werkzeugteiles 110.

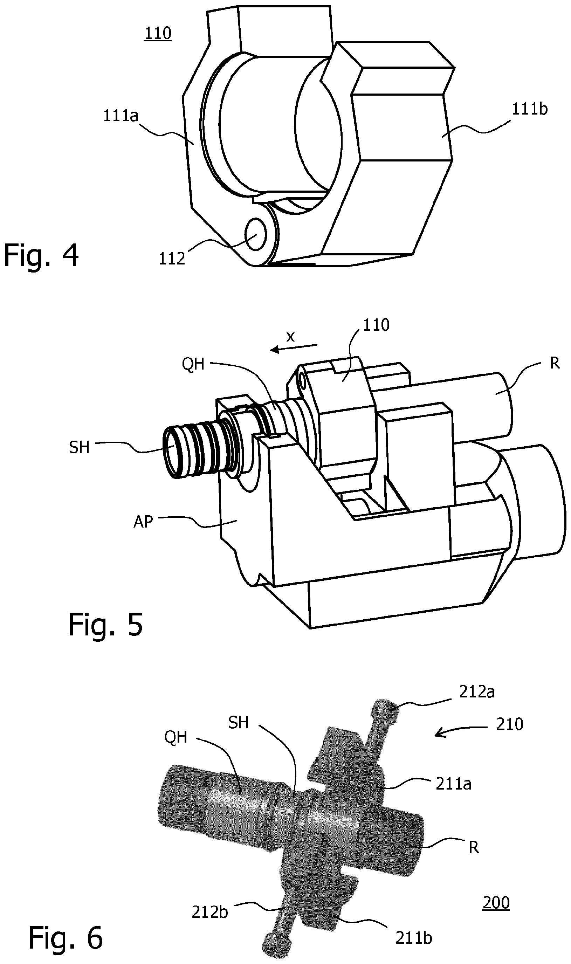

Figur 4 zeigt in einer separaten perspektivischen Ansicht das Schiebepressring/Werkzeugteil 110 in seinem Öffnungszustand. Das Schiebepressring/Werkzeugteil 110 besteht aus zwei halbkreisförmigen Teilen 111a und 111b, welcher an einem ihrer Enden durch ein Scharniergelenk 112 schwenkbeweglich gekoppelt sind. Die anderen Enden können im Arbeitszustand fest miteinander gekoppelt sein, beispielsweise durch (Gewinde-)Bolzen (nicht dargestellt).

Figur 5 zeigt ein Axialpresssystem 100 in dem Zustand von Figur 1 vor der Verpressung. Das Schiebepressring/Werkzeugteil 110 und das Rohr R mit eingesetzter Stützhülse SH und aufgesetzter Quetschhülse QH sind in einer hydraulischen oder mechanischen Axialpresse AP angeordnet. Durch die Axialpresse kann während des Pressvorganges das Schiebepressring/Werkzeugteil 110 in Axialrichtung x über die Quetschhülse QH geschoben werden.

Bei Einsatz des gehärteten Schiebepressring/Werkzeugteils muss die Axialpresse erheblich weniger Druckkräfte aufbringen und erlaubt deshalb durch weniger Gewicht eine erleichterte Handhabung.

Figur 6 zeigt ein Schiebepressring/Werkzeugteil 210 gemäß einer alternativen Ausführungsform in dessen Öffnungszustand beim Entfernen von einer soeben fertig verpressten Rohrkupplung. Das Schiebepressring/Werkzeugteil 210 besteht aus zwei separaten Teilen 211a und 211b, deren Trennung einen Öffnungszustand mit einem quasi beliebig großen "Innendurchmesser" erzeugt. Die Teile können in einen Arbeitszustand (nicht dargestellt) überführt werden, in welchem sie durch Bolzen 212a und 212b miteinander verbunden sind.

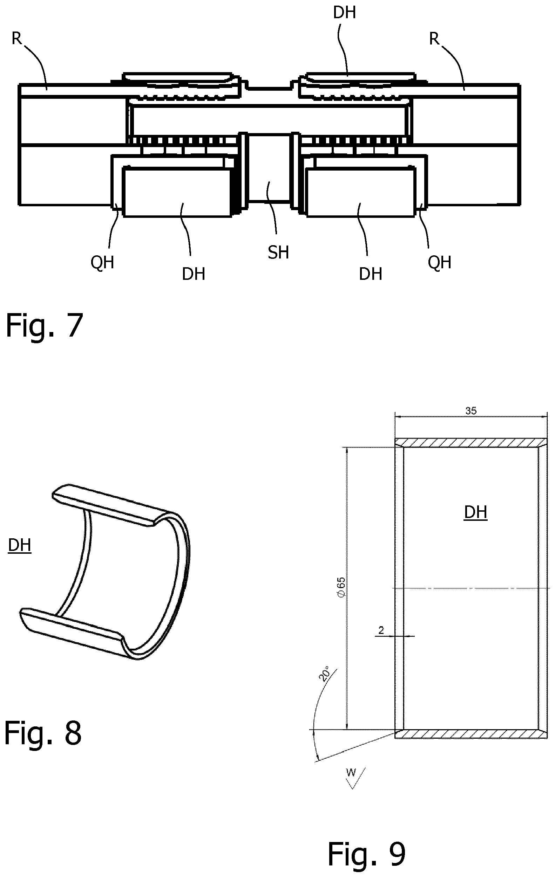

Figur 7 zeigt in einer Darstellung wie in den Figuren 1 bis 3 die Rohrpresskupplung von Figur 3 nach einem zusätzlichen Aufschieben einer Druckhülse DH. Mit der Druckhülse DH kann eine Rückverformung der Quetschhülse verhindert und die Rohrpresskupplung stabilisiert werden.

Figur 8 zeigt die Druckhülse DH perspektivisch mit einem Teil des Mantels entfernt (vollständig hat sie die Form eines rundum geschlossenen Zylindermantels). Figur 9 zeigt die Druckhülse DH im Schnitt mit typischen Abmessungen in mm. Die Druckhülse DH kann insbesondere aus Edelstahl bestehen und eine Wandungsdicke von beispielsweise ca. 1 mm bis ca. 3 mm und mehr haben. Der lichte Innendurchmesser der Druckhülse DH ist vorzugsweise so groß wie der Außendurchmesser der Quetschhülse nach der Verpressung, der im Wesentlichen dem Innendurchmesser D des Schiebepressring/Werkzeugteils 110 entspricht. Insbesondere kann er aber auch etwas kleiner als dieser Durchmesser sein, beispielsweise nur ca. 99% bis 95% von dessen Wert haben, damit die Druckhülse einen radial einwärts gerichteten Druck auf die Quetschhülse ausüben kann. Des Weiteren sind die Stirnseiten der Druckhülse vorzugsweise mit einem Innenkonus versehen, um ein leichteres Aufschieben auf die Quetschhülse zu ermöglichen.

Die Druckhülse DH kann mit demselben Schiebepressring/Werkzeugteil 110 axial auf die Quetschhülse geschoben werden, wie es auch zum Verpressen der Quetschhülse verwendet wurde. Das Schiebepressring/Werkzeugteil 110 schiebt dann mit seiner Stirnseite die Druckhülse DH axial vor sich her.

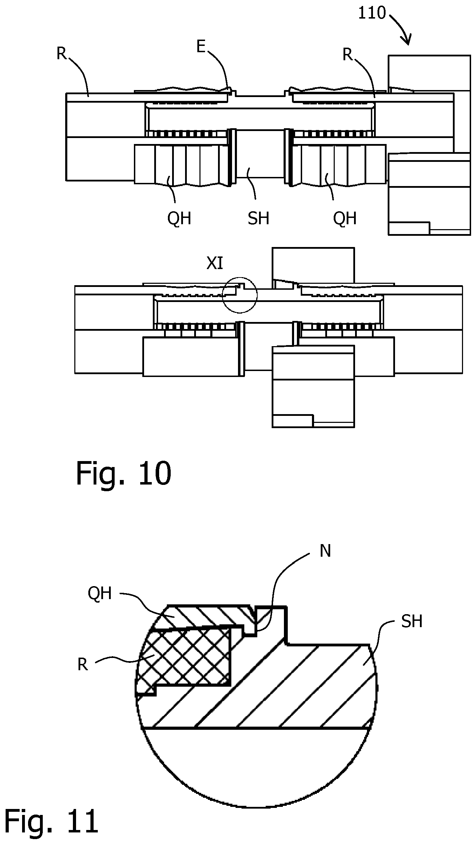

Figur 10 zeigt in einer Darstellung wie bei den Figuren 1 und 2 zwei Rohrenden vor (oberes Bild) und nach (unteres Bild) einer Verpressung. Die gegenüber den Figuren 1 und 2 gleich gebliebenen Komponenten brauchen nicht erneut beschrieben zu werden. Neu ist bei dieser Ausführungsform, dass durch die Verpressung jeweils ein Ende der Quetschhülsen QH an der Stützhülse SH arretiert wird.

Gemäß der Detailansicht von Figur 11 erfolgt diese Arretierung, indem das eine axiale Ende der Quetschhülse QH in eine Nut N eingepresst wird, die an der Außenseite der Stützhülse SH vorgesehen ist. Die Nut N kann nur an einzelnen Punkten des Umfangs vorgesehen sein oder aber vorzugsweise um 360° umlaufend ausgebildet sein. Durch das (nach dem Verpressen) formschlüssige Eingreifen der Quetschhülse QH in die Stützhülse SH wird verhindert, dass die Quetschhülse QH während des späteren Gebrauchs ihre axiale Lage verändern kann. Vorzugsweise weist die Quetschhülse QH vor dem Verpressen an der Position der Nut N zusätzliches Material in Form beispielsweise einer Erhebung E auf.

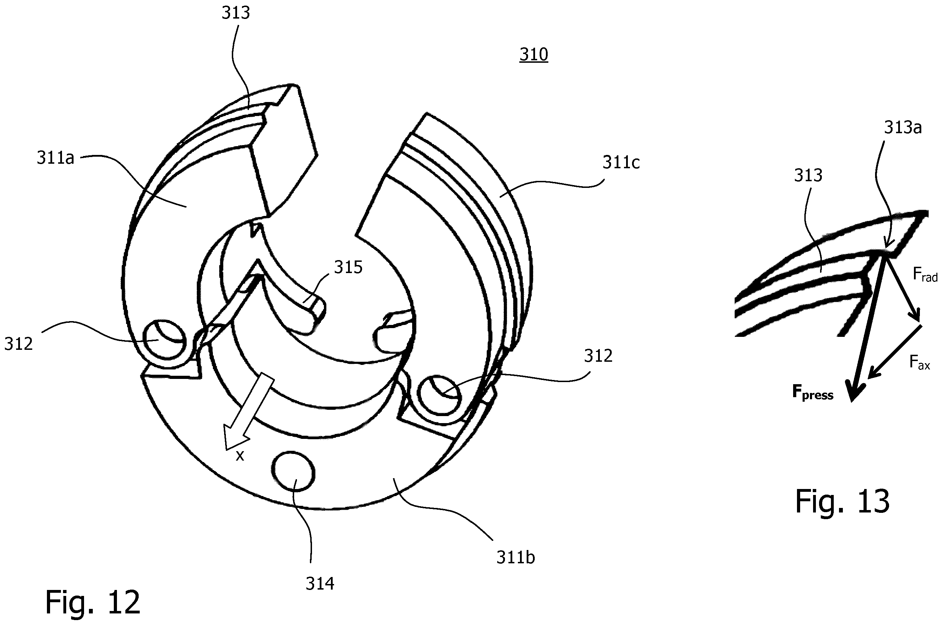

Die beschriebene Technik kann auf zahlreiche Arten modifiziert werden, ohne vom Grundgedanken der Erfindung abzuweichen. Beispielsweise könnte das Schiebepressring/Werkzeugteil auch drei- oder mehrteilig sein. Eine solche Ausführungsform eines Schiebepressring/Werkzeugteil 310 ist in den Figuren 12 bis 15 zu sehen.

Die drei Teile 311a, 311b, 311c des Schiebepressring/Werkzeugteils 310 erstrecken sich im dargestellten Beispiel unter einem Winkel von je ca. 120° und ergänzen sich im geschlossenen Zustand zu einem Vollkreis. Die endständigen Teile 311a, 311c sind dabei schwenkbar in Gelenken 312 mit dem mittleren Teil 311b verbunden.

Die endständigen Teile 311a und 311c können optional Verlängerungen 315 über das Gelenk 312 hinaus aufweisen. Diese wirken als Schließkontur, indem sie beim Einlegen eines Rohres automatisch die endständigen Teile 311a, 311c aufeinander zu bewegen.

Ferner weist das mittlere Teil 311b eine Führungsöffnung 314 auf, die eine komplementäre Führungsstange (nicht dargestellt) der Axialpresse aufnehmen kann, um das Werkzeug während des Verpressens zu halten und zu führen.

Um ein Schiebepressring/Werkzeugteil während eines Pressvorganges geschlossen zu halten, kann es mit einer geeigneten Außenkontur versehen sein, die in Verbindung mit der Axialpresse seine Teile radial zusammendrückt und so geschlossen hält. Beispielsweise können die Teile des Schiebepressring/Werkzeugteils mit einer leicht konischen Außenkontur versehen sein, die in einer komplementär konischen Form der Axialpresse aufgenommen wird.

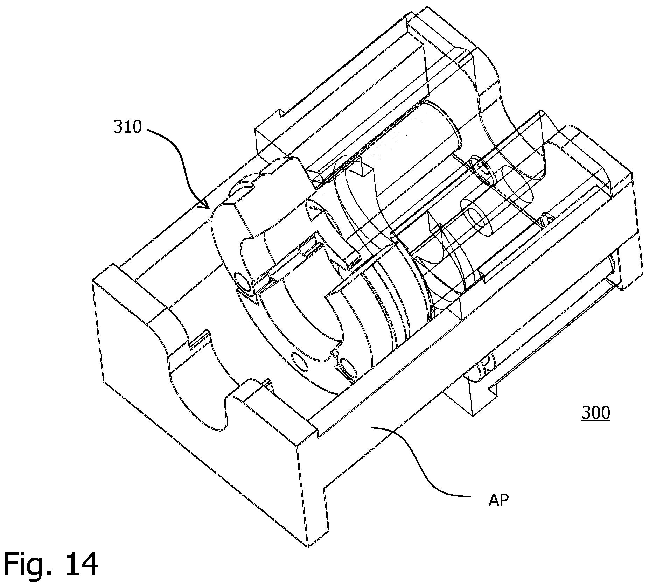

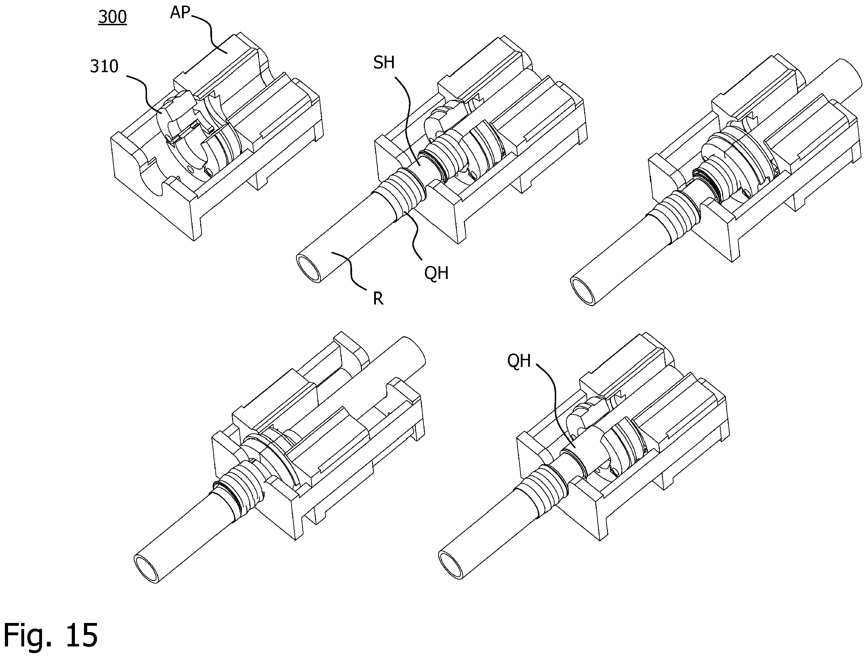

Im Schiebepressring/Werkzeugteil 310 ist dieser Ansatz durch eine 360° umlaufende, radial außen liegende Wulst 313 mit einer zur Axialrichtung x geneigten Gleitfläche 313a verwirklicht. Wie in Figur 13 vergrößert dargestellt ist, wird auf diese Gleitfläche 313a beim Pressvorgang von der zugehörigen Axialpresse eine Presskraft Fₚᵣₑₛₛ ausgeübt, die durch die Neigung der Fläche in eine radial einwärts gerichtete Kraftkomponente F_{rad} und eine in Axialrichtung x weisende Vorschubkomponente Fₐₓ zerlegt wird. Die radiale Kraftkomponente F_{rad} sorgt automatisch dafür, dass das Schiebepressring/Werkzeugteil 310 während des Verpressens geschlossen bleibt. Vorzugsweise ist an der zugehörigen Axialpresse AP (Figuren 14, 15) eine komplementär geneigte Gleitfläche vorgesehen, die mit der Gleitfläche 313a zusammenwirkt. Durch den Neigungswinkel der Fläche 313a kann das Verhältnis zwischen Vorschubkomponente Fₐₓ und Radialkraft F_{rad} nach Wunsch vorgegeben werden.

In Figur 15 sind die einzelnen Phasen der Herstellung einer Rohrpresskupplung mit einem Axialpressesystem 300 dargestellt, das ein Schiebepressring/Werkzeugteil 310 und eine Axialpresse AP enthält. Diese Phasen sind:
- Einlegen des offenen Schiebepressring/Werkzeugteils 310 in die Axialpresse AP (Abbildung oben links).
- Einlegen einer vorbereiteten Rohrverbindung (zwei Rohre R auf Stützhülse SH gesteckt mit übergeschobenen Quetschhülsen QH) in das Schiebepressring/Werkzeugteil 310 (Abbildung oben Mitte).
- Schließen des Schiebepressring/Werkzeugteils 310 um das eingelegte Rohr R durch Wirkung der Verlängerungen 315 (Abbildung oben rechts).
- Vorschub des Schiebepressring/Werkzeugteils 310 in Axialrichtung zum Verpressen der eingelegten Quetschhülse QH (Abbildung unten links).
- Zurückfahren der Backen des Axialpresse AP und Öffnen des Schiebepressring/Werkzeugteils 310 (Abbildung unten rechts).

Der gleiche Vorgang ist anschließend mit der noch unverpressten Quetschhülse QH auszuführen. Des Weiteren kann optional noch eine Druckhülse (vorzugsweise mit derselben Axialpresse AP) über die Quetschhülsen geschoben werden.

Zusammenfassend lässt sich feststellen, dass die Erfindung ein Schiebepressring/Werkzeugteil zur Herstellung einer Rohrpresskupplung betrifft. Das Schiebepressring/Werkzeugteil besteht dabei aus mindestens zwei Teilen bzw. kann von einem Arbeitszustand in einen Öffnungszustand überführt werden. Im verbundenen Zustand der Teile bzw. im Arbeitszustand kann das Schiebepressring/Werkzeugteil in Axialrichtung über eine Quetschhülse verschoben werden, welche auf einem Ende eines Rohres sitzt, in dem eine Stützhülse angeordnet ist. Nach Abschluss der Verpressung kann das Schiebepressring/Werkzeugteil durch Überführung in einen Öffnungszustand bzw. durch Trennen der Teile entfernt werden, so dass es nicht dauerhaft an der Rohrpresskupplung verbleiben muss.

## Patentansprüche

1. Schiebepressring (110, 210, 310) zum Verpressen einer Quetschhülse (QH) auf einem Ende eines Rohres (R), in welches eine Stützhülse (SH) eingeführt ist, wobei der Schiebepressring in einem Arbeitszustand einen Innendurchmesser (D) hat,
und wobei der Schiebepressring in einen Öffnungszustand überführt werden kann, in dem sein Innendurchmesser größer ist als im Arbeitszustand,
**dadurch gekennzeichnet, dass** der Schiebepressring Angriffsflächen (313) aufweist, die zu seiner Axialrichtung (x) geneigt sind, so dass eine dort angreifende Presskraft (Fₚᵣₑₛₛ) eine radial einwärts gerichtete Kraftkomponente (F_{rad}) ausübt, wobei der in Axialrichtung weisende Anteil der Presskraft den Vorschub des Schiebepressrings erzeugt.

2. Schiebepressring (110, 210, 310) nach Anspruch 1,
**dadurch gekennzeichnet, dass** er aus mindestens zwei relativ zueinander beweglichen Teilen (111a, 111b, 211a, 211b, 311a, 311b, 311c) besteht.

3. Schiebepressring (110, 310) nach Anspruch 2,
**dadurch gekennzeichnet, dass** die Teile (111a, 111b, , 311a, 311b, 311c) durch ein Gelenk (112, 312) verbunden sind.

4. Schiebepressring (110, 210, 310) nach Anspruch 2 oder 3,
**dadurch gekennzeichnet, dass** die Teile (111a, 111b, 211a, 211b) im Arbeitszustand durch mindestens einen Bolzen (212a, 212b) verbunden sind.

5. Schiebepressring (110, 210, 310) nach mindestens einem der vorhergehenden Ansprüche,
**dadurch gekennzeichnet, dass** er zumindest teilweise gehärtet ist, insbesondere an der Innenkontur.

6. Axialpresssystem (100, 200, 300) zur Verbindung von Rohren (R), enthaltend:
- eine Stützhülse (SH);
- mindestens eine Quetschhülse (QH);
**gekennzeichnet durch**
- einen Schiebepressring (110, 210, 310) nach mindestens einem der Ansprüche 1 bis 5.

7. Axialpresssystem (100, 200, 300) nach Anspruch 6,
**dadurch gekennzeichnet, dass** es eine Axialpresse (AP) umfasst, mit welcher der Schiebepressring (110, 210, 310) im Arbeitszustand in Axialrichtung (x) über eine Quetschhülse (QH) gepresst werden kann.

8. Axialpresssystem (300) nach Anspruch 7,
**dadurch gekennzeichnet, dass** die Axialpresse (AP) und der Schiebepressring (310) so ausgebildet sind, dass die Axialpresse (AP) beim axialen Vorschub des Schiebepressrings (310) auf dieses eine radial einwärts gerichtet Kraft (F_{rad}) ausübt.

9. Axialpresssystem (100, 200, 300) nach einem der Ansprüche 6 bis 8,
**dadurch gekennzeichnet, dass** es eine Druckhülse (DH) umfasst, welche axial über eine verpresste Quetschhülse (QH) geschoben werden kann.

10. Axialpresssystem (100, 200, 300) nach einem der Ansprüche 6 bis 9,
**dadurch gekennzeichnet, dass** die verpresste Quetschhülse (QH) mit der Stützhülse (SH) unmittelbar verbunden ist.

11. Verfahren zur Herstellung einer Verbindung zwischen den Enden von zwei Rohren (R), umfassend die Schritte:
a) Anordnung der Enden der Rohre (R) auf einer Stützhülse (SH);
b) Anordnung von mindestens einer Quetschhülse (QH) auf einem Rohrende;
c) axiale Verschiebung eines Schiebepressringes (110, 210, 310) nach mindestens einem der Ansprüche 1 bis 5 über die Quetschhülse, so dass Material der Quetschhülse radial nach innen verdrängt wird;
d) Entfernung des Schiebepressringes.

12. Verfahren nach Anspruch 11,
**dadurch gekennzeichnet, dass** nach Schritt d) eine Druckhülse (DH) über die Quetschhülse (QH) geschoben wird, insbesondere durch axiale Verschiebung eines Schiebepressringes (110, 210, 310) nach mindestens einem der Ansprüche 1 bis 5.

## Claims

1. Sliding-compression ring (110, 210, 310) for compressing a pinch sleeve (QH) on an end of a pipe (R), in which a support sleeve (SH) is inserted, wherein the sliding-compression ring has an inner diameter (D) in a working state, and wherein the sliding-compression ring can be transferred into an open state, in which its inner diameter is larger than in the working state,
**characterized in that** the sliding-compression ring has target surfaces (313), which are inclined to its axial direction (x), so that a press force (Fₚᵣₑₛₛ) acting there exerts a radially inwardly directed force component (F_{rad}), wherein the part of the press force pointing in axial direction generates the forward feed of the sliding-compression ring.

2. Sliding-compression ring (110, 210, 310) according to claim 1,
**characterized in that** it comprises at least two parts (111a, 111b, 211a, 211b, 311a, 311b, 311c), which are movable relatively to each other.

3. Sliding-compression ring (110, 310) according to claim 2,
**characterized in that** the parts (111a, 111b, , 311a, 311b, 311c) are connected by a hinge (112, 312).

4. Sliding-compression ring (110, 210, 310) according to claim 2 or 3,
**characterized in that** the parts (111a, 111b, 211a, 211b) are connected by at least one bolt (212a, 212b) in the working state.

5. Sliding-compression ring (110, 210, 310) according to at least one of the preceding claims,
**characterized in that** it is at least partially hardened, particularly at the inner contour.

6. Axial pressing system (100, 200, 300) for connecting pipes (R), comprising:
- a support sleeve (SH);
- at least one pinch sleeve (QH);
**characterized by**
- a sliding-compression ring (110, 210, 310) according to at least one of the claims 1 to 5.

7. Axial pressing system (100, 200, 300) according to claim 6,
**characterized in that** it comprises an axial press (AP), with which the sliding-compression ring (110, 210, 310) can be pressed in axial direction (x) over a pinch sleeve (QH) in the working state.

8. Axial pressing system (300) according to claim 7,
**characterized in that** the axial press (AP) and the sliding-compression ring (310) are formed in such a way that the axial press (AP) exerts, during the axial forward feed of the sliding-compression ring (310), a radially inwardly directed force (F_{rad}) on it.

9. Axial pressing system (100, 200, 300) according to one of the claims 6 to 8,
**characterized in that** it comprises a compression sleeve (DH), which can be slid axially over a compressed pinch sleeve (QH).

10. Axial pressing system (100, 200, 300) according to one of the claims 6 to 9,
**characterized in that** the compressed pinch sleeve (QH) is connected directly with the support sleeve (SH).

11. Method for producing a connection between the ends of two pipes (R), comprising the steps:
a) arranging the ends of the pipes (R) on a support sleeve (SH);
b) arranging at least one pinch sleeve (QH) on a pipe end;
c) axially moving a sliding-compression ring (110, 210, 310) according to at least one of the claims 1 to 5 over the pinch sleeve so that material of the pinch sleeve is displaced radially inwardly;
d) removing the sliding-compression ring.

12. Method according to claim 11,
**characterized in that** after step d) a compression sleeve (DH) is slid over the pinch sleeve (QH), particularly by axially moving of a sliding-compression ring (110, 210, 310) according to at least one of the claims 1 to 5.

## Revendications

1. Anneau coulissant de compression (110, 210, 310) pour comprimer une douille de sertissage (QH) sur une extrémité d'un tuyau (R), dans lequel est inséré une douille de support (SH), selon lequel l'anneau coulissant de compression a un diamètre intérieur (D) en état de fonctionnement, et selon lequel l'anneau coulissant de compression peut être transformé dans un état ouvert, dans lequel son diamètre intérieur est plus grand qu'en état de fonctionnement,
**caractérisé en ce que** l'anneau coulissant de compression a des surfaces de cible (313), qui sont inclinées dans sa direction axiale (x), de sorte qu'une force de compression (Fₚᵣₑₛₛ) attaquant là, exerce un composant de force (F_{rad}) dirigé radialement vers l'intérieur, selon lequel la partie de la force de compression montrant en direction radiale génère l'avance de l'anneau coulissant de compression.

2. Anneau coulissant de compression (110, 210, 310) selon la revendication 1,
**caractérisé en ce qu'**il se compose d'au moins deux parts (111a, 111b, 211a, 211b, 311a, 311b, 311c) qui sont mobiles l'une par rapport à l'autre.

3. Anneau coulissant de compression (110, 310) selon la revendication 2,
**caractérisé en ce que** les parts (111a, 111b, 311a, 311b, 311c) sont reliées par une articulation (112, 312).

4. Anneau coulissant de compression (110, 210, 310) selon la revendication 2 ou 3,
**caractérisé en ce que** les parts (111a, 111b, 211a, 211b) sont reliées en état de fonctionnement par au moins un boulon (212a, 212b).

5. Anneau coulissant de compression (110, 210, 310) selon au moins l'une quelconque des revendications précédentes.
**caractérisé en ce qu'**il est au moins partiellement durci, particulièrement au contour intérieur.

6. Système axial de compression (100, 200, 300) pour le raccordement de tuyaux (R), comprenant:
- une douille de support (SH);
- au moins une douille de sertissage (QH);
**caractérisé par**
- un anneau coulissant de compression (110, 210, 310) selon au moins une des revendications 1 à 5.

7. Système axial de compression (100, 200, 300) selon la revendication 6, **caractérisé en ce qu'**il comprend une presse axiale (AP), par laquelle en état de fonctionnement l'anneau coulissant de compression (110, 210, 310) peut être pressé sur une douille de sertissage (QH) en direction axiale (x).

8. Système axial de compression (300) selon la revendication 7, **caractérisé en ce que** la presse axiale (AP) et l'anneau coulissant de compression (310) sont formés de sorte que la presse axiale (AP) exerce une force sur le système dirigé radialement vers l'intérieur (F_{rad}) pendant l'avance axiale de l'anneau coulissant de compression (310).

9. Système axial de compression (100, 200, 300) selon une des revendications 6 à 8,
**caractérisé en ce qu'**il comprend une douille de compression (DH), qui peut être coulissée axialement sur une douille comprimée de sertissage (QH).

10. Système axial de compression (100, 200, 300) selon une des revendications 6 à 9,
**caractérisé en ce que** la douille comprimée de sertissage (QH) est reliée directement avec la douille de support (SH).

11. Procédé pour établir un raccordement entre les extrémités de deux tuyaux (R), comprenant les étapes:
a) arrangement des extrémités des tuyaux (R) sur une douille de support (SH);
b) arrangement d'au moins une douille de sertissage (QH) sur une extrémité de tuyau;
c) glissement axial d'un anneau coulissant de compression (110, 210, 310) selon au moins une des revendications 1 à 5 sur la douille de sertissage de sorte que matériel de la douille de sertissage est déplacé radialement à l'intérieur;
d) enlèvement de l'anneau coulissant de compression.

12. Procédé selon la revendication 11,
**caractérisé en ce qu'**après l'étape d) une douille de compression (DH) est coulissée sur la douille de sertissage (QH), particulièrement par glissement axial d'un anneau coulissant de compression (110, 210, 310) selon au moins une des revendications 1 à 5.
